# EUROPEAN PATENT APPLICATION

(11) **EP 4 819 633 A1**
(43) Date of publication of application: **07.10.2026**
(21) Application number: 24913350.5
(22) Date of filing: 19.11.2024
(51) Int. Cl.: H04N 23/80, H04N 23/71, H04N 23/741, H04N 23/76, H04N 23/65, H04N 5/77, H04N 5/92, G06T 5/60, G06N 3/08

(54) **ELECTRONIC DEVICE AND METHOD FOR ACQUIRING PROCESSED IMAGE ON BASIS OF MACHINE LEARNING MODEL**

(30) Priority: 26.12.2023 KR 20230191483; 08.02.2024 KR 20240019739
(71) Applicant: Samsung Electronics Co., Ltd., Suwon-si, Gyeonggi-do 16677 (KR)
(72) Inventor: SONG, Sejun, Suwon-si Gyeonggi-do 16677 (KR); CHOI, Jongbum, Suwon-si Gyeonggi-do 16677 (KR); PARK, Hyunhee, Suwon-si Gyeonggi-do 16677 (KR)
(74) Representative: Appleyard Lees IP LLP
(86) International application number: PCT/KR2024/018225
(87) International publication number: WO 2025/143543

(57) **Abstract**

In an embodiment, an electronic device may include one or more processors, and memory configured to store one or more instructions and a neural network model created by training a neural network to output an inference result for information of an input image. The one or more instructions, when executed by the one or more processors, may cause the electronic device to determine at least one image processing step for acquiring a processed image from a target image, among a plurality of image processing steps performed by the neural network model, based on image information related to the target image or context information related to a state of the electronic device. The one or more instructions, when executed by the one or more processors, may cause the electronic device to acquire the processed image from the target image, based on the determined at least one image processing step. Each of the plurality of image processing steps may include acquiring an inference result by inputting the target image or an output of the neural network model to the neural network model. Various embodiments other than the aforementioned embodiments are possible.

## Description

### [Background Art]

The disclosure relates to an electronic device for acquiring a processed image, based on a machine learning model, and a method thereof.

### [Background Art]

Images may be enhanced using a neural network model acquired by training a neural network through deep learning. Image super-resolution may be used to create a high-resolution image corresponding to an input low-resolution image. Training data may be learned in an artificial intelligence neural network through a deep learning algorithm. The training data may include pairs of data and labels (ground-truth data). A large amount of training data may be required for training the artificial intelligence neural network. For example, the artificial intelligence neural network may be configured to learn training data including pairs of images (labels) and degraded images acquired by degrading the images, and to predict enhanced images from the degraded images.

The aforementioned information may be provided as the related art for aiding understanding of the disclosure. None of the aforementioned content is claimed as the prior art related to the disclosure, nor is it used to determine the prior art related to the disclosure.

### [Disclosure of Invention]

### [Solution to Problem]

In an embodiment, an electronic device may include one or more processors, and memory configured to store one or more instructions and a neural network model created by training a neural network to output an inference result for information of an input image. The one or more instructions, when executed by the one or more processors, may cause the electronic device to determine at least one image processing step for acquiring a processed image from a target image, among a plurality of image processing steps performed by the neural network model, based on image information related to the target image or context information related to a state of the electronic device. The one or more instructions, when executed by the one or more processors, may cause the electronic device to acquire the processed image from the target image, based on the determined at least one image processing step. Each of the plurality of image processing steps may include acquiring an inference result by inputting the target image or an output of the neural network model to the neural network model.

A method of operating an electronic device according to an embodiment may include determining at least one image processing step for acquiring a processed image from a target image among a plurality of image processing steps performed using a neural network model created by training a neural network to predict a processing result for an input image, based on image information related to the target image or context information related to a state of the electronic device. The method of operating the electronic device according to an embodiment may include acquiring the processed image from the target image, based on the determined at least one image processing step. The acquiring of the processed image may include inputting the target image to the neural network model to perform a first step among the at least one image processing step. The acquiring of the processed image may include inputting an output image, which is output as a result of performing the first step for the target image by the neural network model, to the neural network model to perform a second step among the at least one image processing steps.

In an embodiment, a non-transitory computer-readable storage medium storing one or more programs may store a computer program including instructions, when executed by an electronic device, causing the electronic device to perform the aforementioned method.

### [Brief Description of Drawings]

Fig. 1 is a block diagram illustrating an electronic device in a network environment according to various embodiments.
Fig. 2 is a block diagram illustrating the camera module according to various embodiments.
FIG. 3 conceptually illustrates a process in which an electronic device performs an operation for acquiring a processed image, according to an embodiment;
FIG. 4 is a flowchart illustrating a process in which an electronic device operates according to an embodiment;
FIG. 5 conceptually illustrates an example in which an electronic device selects at least one step from among a plurality of steps, according to an embodiment;
FIG. 6 is a flowchart illustrating a process in which an electronic device performs an operation for acquiring a processed image, according to an embodiment;
FIG. 7 illustrates a relationship between a step established in a learning process and a step performed in a process of performing an operation for acquiring a processed image, in case of performing the operation for acquiring the processed image based on a plurality of steps, in an embodiment;
FIG. 8 illustrates a relationship between a step established in a learning process and a step performed in an operation for acquiring a processed image, in case of performing the operation for acquiring the processed image based on at least one of a plurality of steps, in an embodiment;
FIG. 9 is a flowchart illustrating a process including an operation of storing an image while an electronic device performs an operation for acquiring a processed image, according to an embodiment;
FIG. 10 is a flowchart illustrating a process in which an electronic device stops and resumes an operation for acquiring a processed image, according to an embodiment; and
FIG. 11 is a block diagram illustrating a configuration of an electronic device according to an embodiment.

### [Mode for the Invention]

Hereinafter, with reference to the attached drawings, embodiments are described in detail so as to be readily implemented by those skilled in the art to which the disclosure pertains. However, the disclosed embodiments may be realized in different forms and are not limited to the embodiments described herein.

An electronic device and an operating method thereof according to various embodiments may be configured to acquire high-quality images at a fast processing speed.

An electronic device and an operating method thereof according to various embodiments may be configured to reduce current consumption required to acquire high-quality images.

Technical problems to be solved in the disclosure are not limited to the technical problems mentioned above, and other technical problems not mentioned herein may be clearly understood by those skilled in the art to which the disclosure pertains from the following descriptions.

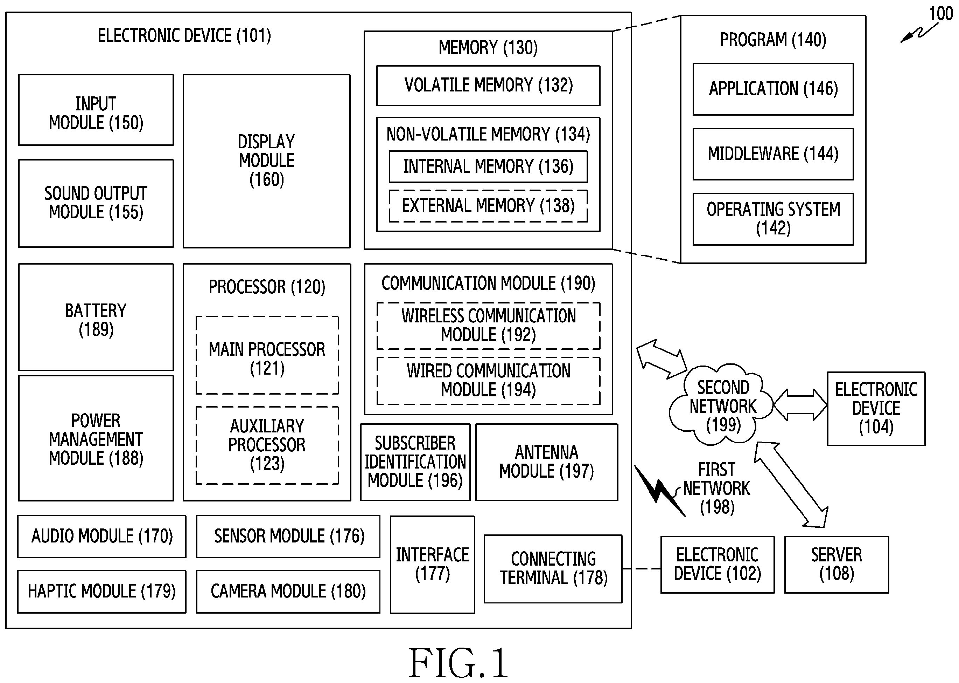

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

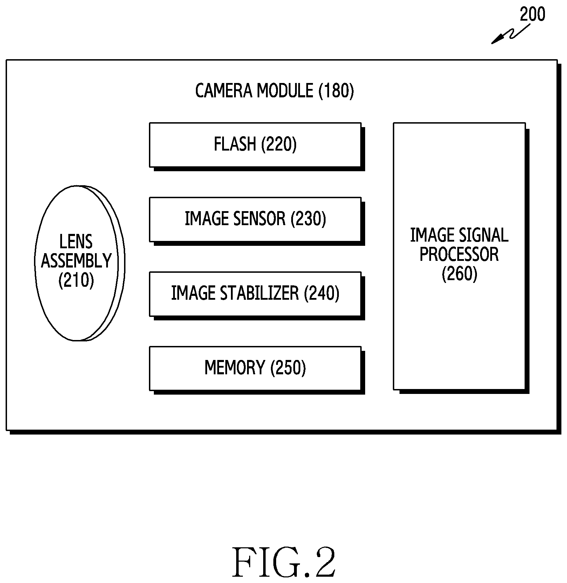

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

In the disclosure, the operation of the electronic device may be understood as being performed by one or more processors executing one or more instructions stored in a memory to perform computations or control components of the electronic device. Alternatively, the one or more processors of the electronic device may include a circuit configured to perform the operation of the electronic device of the disclosure.

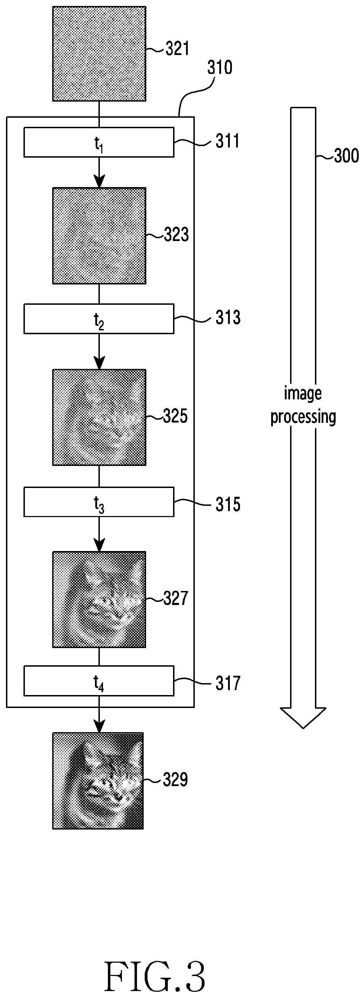

FIG. 3 conceptually illustrates a process in which an electronic device (e.g., the electronic device 101 of FIG. 1) performs an image processing operation 300 for acquiring a processed image, according to an embodiment. In the disclosure, the image processing operation 300 for acquiring the processed image may include an inference process performed by a neural network model configured through data training.

According to an embodiment, the electronic device may perform the image processing operation 300 for acquiring a processed image to acquire an enhanced image 329 from a target image 321, based on an iterative refinement model 310. The iterative refinement model 310 may be created by learning degraded images acquired by repeatedly degrading a ground-truth image as training data. For example, the training data may include a first degraded image acquired by adding noise to the ground-truth image as data corresponding to the ground-truth image, a second degraded image acquired by adding noise to the first degraded image, and a third degraded image acquired by adding noise to the second degraded image. The iterative refinement model 310 may be created by learning, in a reverse manner, an image degradation process by repeatedly removing noise from degraded images. A process of training a neural network may be performed by the electronic device, or a neural network model acquired through another device as a result of training may be mounted on the electronic device. In the disclosure, a process of training the neural network by restoring a degraded image through a plurality of steps corresponding to a plurality of degradation steps may be described as training based on a diffusion process. The iterative refinement model 310 trained based on N degraded images may include a process of acquiring the enhanced image (processed image) 329 from the target image through N steps.

In an example illustrated in FIG. 3, the image processing operation 300 for acquiring the processed image is performed based on the iterative refinement model 310 having four steps. According to an embodiment, the electronic device may perform a first image processing step 311 in which the target image 321 is input to the neural network model to output an output image 323 from the target image 321. Although it is illustrated in FIG. 3, for convenience of description, that an image is input to the neural network model and an image is output from the neural network model, it may be understood that feature information acquired from the image is input to the neural network model and feature information inferred through the neural network model is output. Alternatively, the neural network model may extract feature information from an input image and output an inference result inferred from the extracted feature information. The inference result may be a prediction of an enhanced image expected to be acquired when image processing is performed, or feature information of the enhanced image. The electronic device may identify at least one image processing step to be performed through the neural network model, based on a step identification value. An image processing step mentioned in the disclosure may include an inference step included in a plurality of inference steps performed through a neural network model trained based on a diffusion process. In the disclosure, the image processing step may be described as an operation of outputting an image inferred through the neural network model by receiving, as an input, a target image or an output value of a previously performed image processing step while performing an operation for acquiring a processed image.

Referring to FIG. 3, the electronic device may perform a second image processing step 313 by inputting the output image 323 of the first image processing step 311 to the neural network model. The electronic device may perform a third image processing step 315 by inputting an output image 325 of the second image processing step 313 to the neural network model. The electronic device may perform a fourth image processing step 317 by inputting an output image 327 of the third image processing step 315 to the neural network model. As a result of performing the fourth image processing step 317, the electronic device may acquire the enhanced image 329. For convenience of description, it is illustrated in FIG. 3 that the enhanced image 329 is output from the neural network model. However, it may be understood that the enhanced image 329 is reconstructed based on feature information output from the neural network model.

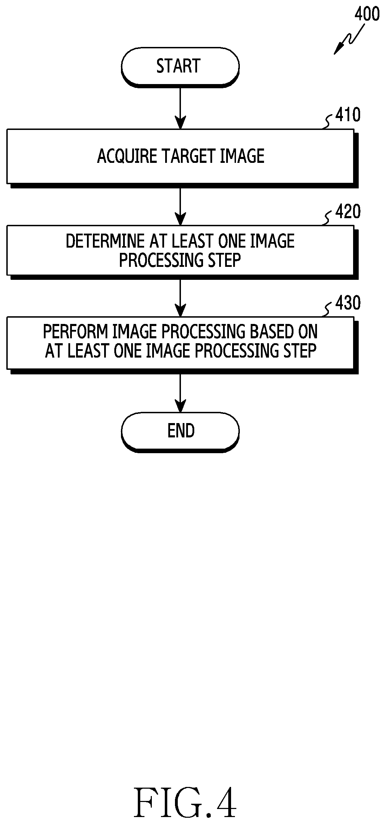

FIG. 4 is a flowchart 400 illustrating a process in which an electronic device (e.g., the electronic device 101 of FIG. 1) operates according to an embodiment.

In operation 410, the electronic device according to an embodiment may acquire a target image (e.g., the target image 321 of FIG. 3). The target image 321 may include, for example, an image captured by a camera module (e.g., the camera module 180 of FIG. 1 and FIG. 2) of the electronic device. The target image 321 may be an image stored in a memory (e.g., the memory 130 of FIG. 1) of the electronic device. The target image 321 may also be an image received from an external device (e.g., the electronic device 102, the electronic device 104, or the server 108 of FIG. 1).

In operation 420, the electronic device according to an embodiment may determine at least one image processing step for performing an image processing operation (e.g., the image processing operation 300 of FIG. 3) to acquire a processed image among a plurality of image processing steps (e.g., the image processing steps 311, 313, 315, and 317 of FIG. 3) included in an iterative refinement model (e.g., the iterative refinement model 310 of FIG. 3). In an embodiment, the electronic device may determine at least one image processing step for performing the image processing operation to acquire the processed image based on image information or context information. The image information may refer to information related to the target image. For example, the image information may include information on a category of a subject (e.g., a person's face, the sky, text) or a scene (e.g., landscape, portrait) captured in the target image. For example, the image information may include information on characteristics of the target image (e.g., image quality, noise level, amount of detail, dynamic range, brightness). For example, the image information may be included in metadata of the target image. The context information may refer to a setting value for capturing an image by the electronic device through a camera and configuration information related to an environment or condition for performing the image processing operation to acquire the processed image. For example, the context information may include ambient light information detected by an ambient light sensor (e.g., the sensor module 176 of FIG. 1, the image sensor 230 of FIG. 2) of the electronic device. For example, the context information may include a sensor gain value of the image sensor (e.g., the image sensor 230 of FIG. 2) configured to capture the target image. For example, the context information may include information on a remaining capacity of a battery (e.g., the battery 189 of FIG. 1) of the electronic device, identified at a time of performing the image processing operation to acquire the processed image. For example, the context information may include temperature information detected by a temperature sensor (e.g., the sensor module 176 of FIG. 1) included in the electronic device. For example, the context information may include information on a time (e.g., nighttime) at which the target image is captured. For example, the context information may include information on processor utilization associated with processes. For example, the context information may include information related to applications running on the electronic device. However, the image information or the context information is not limited to the aforementioned example.

According to an embodiment, the electronic device may select at least some of the plurality of image processing steps to determine at least one image processing step. For example, the electronic device may determine at least one image processing step having a different number of steps from the total number of the plurality of image processing steps included in the iterative refinement model (e.g., the iterative refinement model 310 of FIG. 3) based on the image information or the context information. For example, the electronic device may select 200 image processing steps from among 1000 image processing steps. For example, when the target image is a high dynamic range (HDR) image, the electronic device may determine at least one image processing step including a greater number of steps. For example, when the image sensor has a high sensor gain value, the electronic device may determine the at least one image processing step including a greater number of steps. For example, the electronic device may determine a smaller number of steps to be the at least one image processing step as the ambient light information indicates higher illuminance.

In an embodiment, the electronic device may divide the target image into a plurality of regions and allow each region to undergo a different number of image processing steps. For example, the electronic device may allow regions containing a person's face or regions displaying text to undergo a greater number of image processing steps. Various methods may be implemented to divide the target image into the plurality of regions. For example, the electronic device may divide the target image into the plurality of regions based on regions in which objects appear in an image through semantic segmentation. However, the disclosure is not limited thereto. For example, the electronic device may divide the target image into the plurality of regions based on information acquired as a result of performing face detection on the target image, skin color information detected from the target image, or frequency information (e.g., values of high-frequency components or low-frequency components) acquired from the target image.

In operation 430, the electronic device according to an embodiment may perform the image processing operation to acquire the processed image from the target image, based on the determined at least one image processing step. The electronic device may operate optionally by selecting one of an operation mode which prioritizes image quality of an enhanced image acquired as a resulting image and an operation mode which prioritizes a processing speed, while performing the image processing operation for acquiring the processed image based on the selected at least one image processing step. For example, when the image processing operation is performed to acquire a processed image from a target image which does not require a greater number of steps, the electronic device may acquire the processed image at a relatively fast speed through a small number of image processing steps.

In an embodiment, at least some of the operations illustrated in the flowchart 400 may be performed by different devices. For example, at least part of operations 410 and 420 may be performed by an application processor (AP) or a central processing unit (CPU) of the electronic device, and at least part of operation 430 may be performed by a neural processing unit (NPU) or a graphics processing unit (GPU). For example, operations 410 and 420 may be performed by the electronic device, while operation 430 may be performed by an external device which receives feature information of the target image and information on the determined at least one image processing step. For example, operation 430 may be performed through an artificial neural network implemented through at least one processing circuit included in the electronic device.

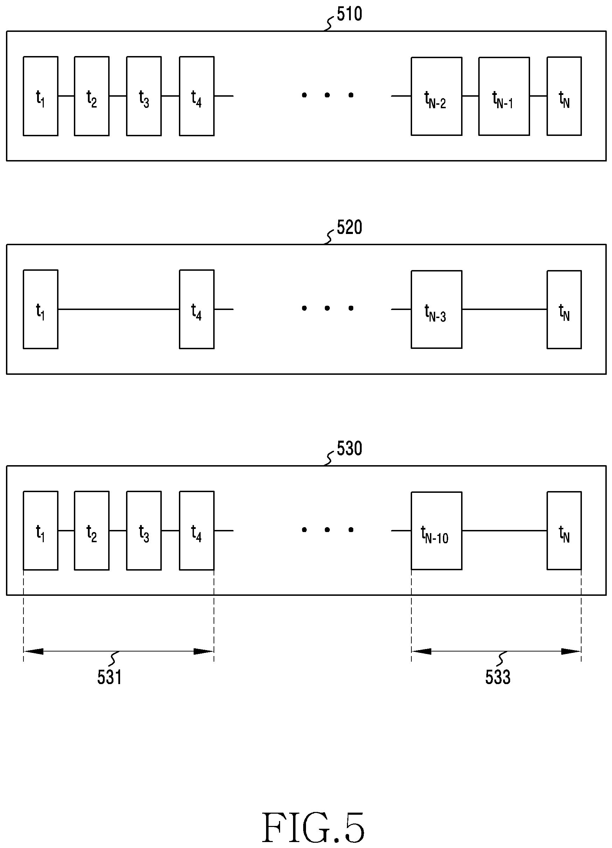

FIG. 5 conceptually illustrates an example in which an electronic device (e.g., the electronic device 101 of FIG. 1) selects at least one step from among a plurality of steps, according to an embodiment.

In an embodiment, an iterative refinement model 510 trained using stepwise degraded images as training data may be configured such that the electronic device provides an enhanced image by performing a plurality of steps of inputting feature information to a neural network model. For example, referring to FIG. 5, the iterative refinement model 510 may be configured such that the electronic device provides the enhanced image through N image processing steps. The N image processing steps included in the iterative refinement model 510 may be identified based on a step identification value.

In an embodiment, the electronic device may determine at least one image processing step 520, corresponding to M image processing steps (where M may be a natural number), for performing an image processing operation to acquire a processed image from a target image among N image processing steps (where N may be a natural number) included in the iterative refinement model 510 (e.g., in operation 420 of FIG. 4). For example, the image processing step 520 of FIG. 5 illustrates an example configured to execute image processing steps included in the iterative refinement model 510 while skipping three steps at a time. M may have a value different from N. For example, when the image processing operation is performed to acquire a processed image for an HDR image, the electronic device may determine M to be a great value in order to perform the image processing operation for acquiring the processed image through a greater number of steps. The electronic device may determine M to be a smaller value as a dynamic range of the target image decreases. For example, as a sensor gain value applied to an image sensor (e.g., the image sensor 230 of FIG. 2) of a camera module (e.g., the camera module 180 of FIG. 1 and FIG. 2) to detect light and output a detected value increases, the electronic device may acquire the processed image based on a larger value of M. The electronic device may acquire the processed image based on a smaller value of M as the sensor gain value decreases. For example, the electronic device may acquire the processed image based on the smaller value of M for a target image captured outdoors during daytime.

In an embodiment, the electronic device may determine a plurality of image patches acquired by dividing the target image into a plurality of regions, and may determine at least one image processing step to be applied to each of the plurality of image patches. For example, the electronic device may allow an image patch in which a designated object (e.g., an object classified as a main subject such as a person's face, text, or the like) appears to undergo a greater number of image processing steps.

Referring to FIG. 5, although the at least one image processing step 520 may be determined to be performed by skipping the plurality of image processing steps included in the iterative refinement model 510 at regular intervals, the electronic device may perform the image processing operation for acquiring the processed image based on at least one image processing step 530 having irregular intervals within the iterative refinement model 510. Referring to FIG. 5, in a first section 531 in which noise is high and feature information resulting from performing image processing steps changes in a great amount, the electronic device may perform the image processing operation for acquiring the processed image based on image processing steps having narrow intervals (e.g., without skipping steps). In a second section 533 in which noise is low and the feature information resulting from performing image processing steps changes in a small amount, the electronic device may perform the image processing operation for acquiring the processed image based on image processing steps having wide intervals (e.g., skipping nine steps).

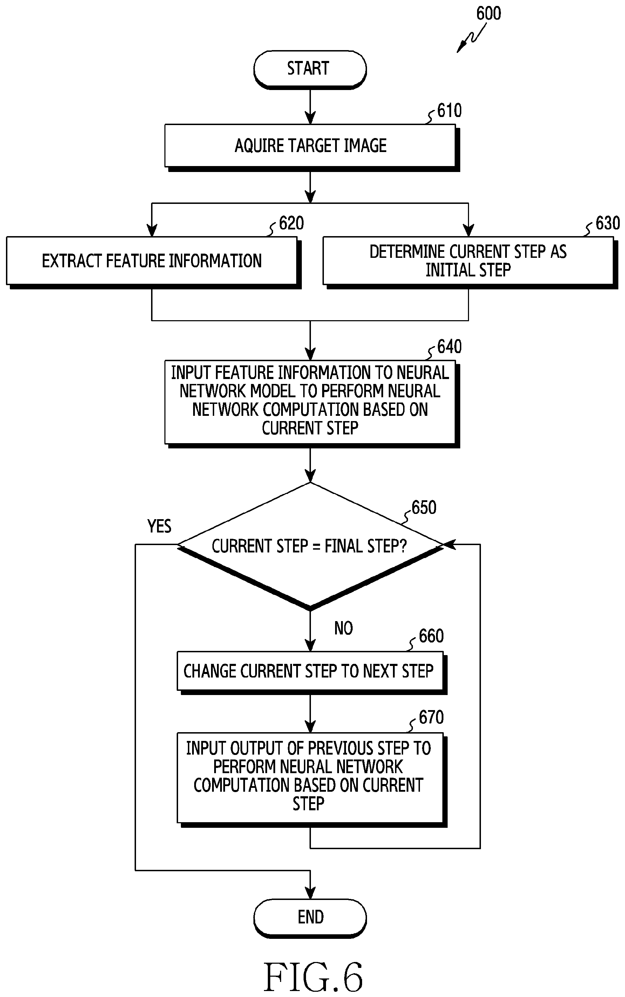

FIG. 6 is a flowchart 600 illustrating a process in which an electronic device (e.g., the electronic device 101 of FIG. 1) performs an image processing operation for acquiring a processed image, according to an embodiment.

The flowchart 600 of FIG. 6 illustrates a process of performing an image processing operation to acquire a processed image based on at least one image processing step determined among a plurality of image processing steps. In operation 610, the electronic device according to an embodiment may acquire a target image (e.g., the target image 321 of FIG. 3). For example, the electronic device may capture an image through a camera module (e.g., the camera module 180 of FIG. 1 or 2) to acquire image data. For example, the electronic device may acquire an image stored in a memory (e.g., the memory 130 of FIG. 2). For example, the electronic device may receive an image from an external device (e.g., the electronic device 102, the electronic device 104, or the electronic device 108 of FIG. 1) through a communication module (e.g., the communication module 190 of FIG. 1).

In an embodiment, upon initiating the image processing operation for acquiring the processed image for the target image, the electronic device may perform operation 620 of extracting feature information from the target image. The electronic device may perform operation 630 of setting a current step to an initial step.

In an embodiment, the electronic device may perform operation 640 of inputting the feature information extracted in operation 620 to a neural network model to perform a neural network computation based on the current step (e.g., the initial step) among the at least one image processing step. The electronic device may input the feature information and an identification value for the current image processing step to the neural network model.

In an embodiment, the electronic device may perform operation 650 of determining whether the current step is a final step. When the current step is not the final step, the electronic device may perform operation 660 of changing the current step to a next step among the at least one image processing step (e.g., the at least one image processing step determined in operation 420 of FIG. 4). In operation 670, the electronic device may input an output of a previous step to the neural network model to perform the neural network computation based on the current step. In operation 670, the electronic device may input a step identification value indicating the current step to the neural network model, so that the neural network computation corresponding to the current step is performed for the output of the previous step. The electronic device may repeat the operation of inputting the output of the neural network computation to the neural network model again until the final step (e.g., t_{N} of FIG. 5) included in the at least one image processing step is performed.

In operation 650, when the current step is the final step, the electronic device according to an embodiment may acquire an enhanced image based on the output of the neural network model. For example, the electronic device may acquire the enhanced image by reconstructing an image based on feature information included in the output of the neural network model.

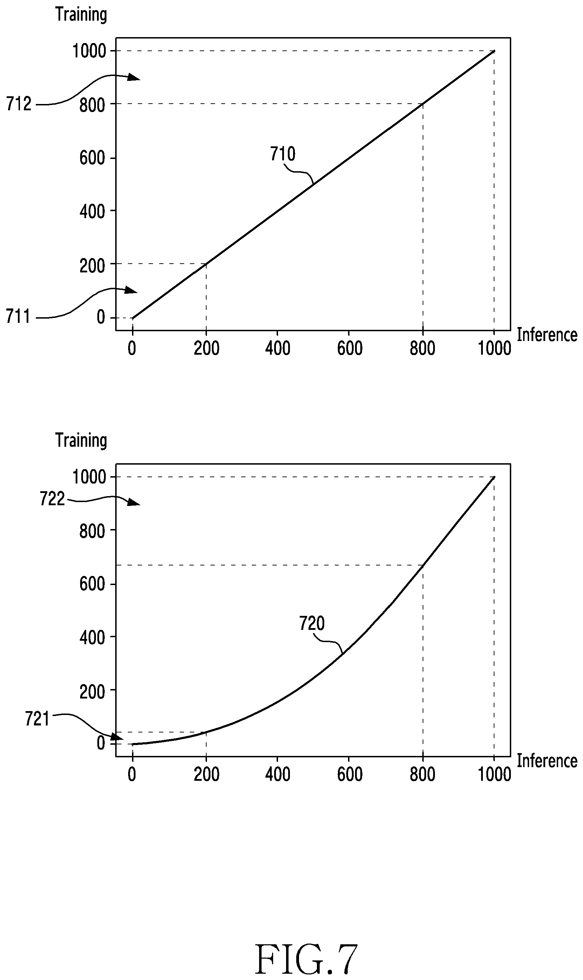

FIG. 7 illustrates a relationship between a step established in a learning process and a step performed in a process of performing an image processing operation for acquiring a processed image, in case of performing the image processing operation for acquiring the processed image based on a plurality of steps, in an embodiment.

The relationship illustrated in FIG. 7 is for determining at least one image processing step for performing image processing based on an iterative refinement model (e.g., the iterative refinement model 310 of FIG. 3, the iterative refinement model 510 of FIG. 5) trained to output the processed image based on 1000 image processing steps.

In an embodiment, the electronic device may determine at least one image processing step to be performed in an inference process for image processing based on a linear relationship 710. When the electronic device is trained to perform the inference process based on the 1000 image processing steps, the iterative refinement model may include the 1000 image processing steps (inference steps). When the electronic device performs the image processing operation (inference) for acquiring the processed image based on 1000 steps, among the at least one image processing step, image processing steps 1 to 200 of a first section 711 may correspond to steps 1 to 200 of the iterative refinement model. Among the at least one image processing step, image processing steps 801 to 1000 of a second section 712 may correspond to steps 801 to 1000 of the iterative refinement model.

In an embodiment, the electronic device may determine at least one image processing step to be performed in the inference process based on a nonlinear relationship 720. When the electronic device performs the image processing operation for acquiring the processed image based on 1000 steps, among the at least one image processing step, image processing steps 1 to 200 of a third section 721 may correspond to less than 200 steps (1 to 200 steps) of the iterative refinement model. Among the at least one image processing step, image processing steps 801 to 1000 of a fourth section 722 may correspond to more than 200 steps (801 to 1000 steps) of the iterative refinement model.

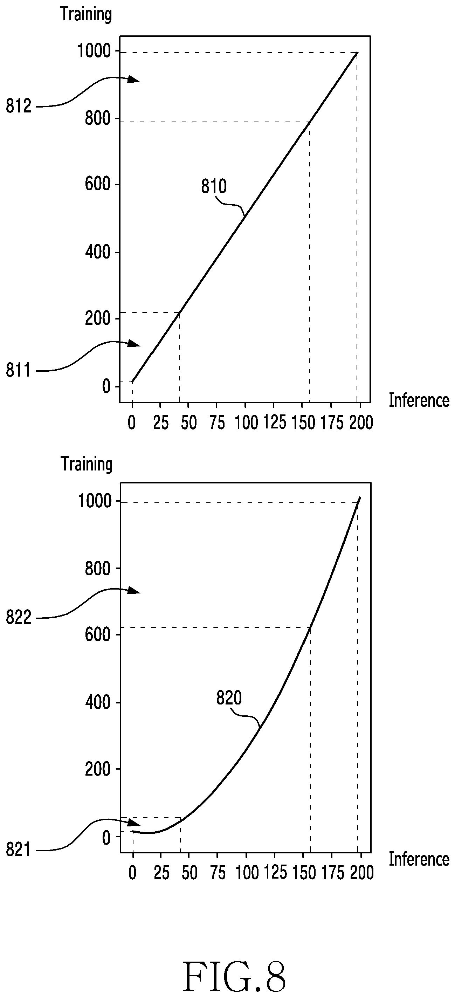

FIG. 8 illustrates a relationship between a step established in a learning process and a step performed in an image processing operation for acquiring a processed image, in case of performing the image processing operation for acquiring the processed image based on at least one of a plurality of steps, in an embodiment.

The relationship illustrated in FIG. 8 is for determining 200 image processing steps for performing an image processing operation to acquire a processed image based on an iterative refinement model (e.g., the iterative refinement model 310 of FIG. 3, the iterative refinement model 510 of FIG. 5) trained to perform the image processing operation for acquiring the processed image based on 1000 image processing steps.

In an embodiment, the electronic device may determine at least one image processing step to be performed in an inference process for image processing based on a linear relationship 810. When the electronic device is trained to perform the inference process based on the 1000 image processing steps, the iterative refinement model may include the 1000 image processing steps (inference steps). When the electronic device performs the image processing operation for acquiring the processed image based on 200 steps, among the at least one image processing step, image processing steps 1 to 40 of a fifth section 811 may correspond to steps 1 to 200 of the iterative refinement model. Among the at least one image processing step, image processing steps 161 to 200 of a sixth section 812 may correspond to steps 801 to 1000 of the iterative refinement model. For example, whenever performing the image processing step, the electronic device may increase a next step by five steps (e.g., 1, 6, 11, 16, ...) of the iterative refinement model.

In an embodiment, the electronic device may determine at least one image processing step to be performed in the inference process based on a nonlinear relationship 820. When the electronic device performs the image processing operation for acquiring the processed image based on 200 steps, among the at least one image processing step, image processing steps 1 to 40 of a seventh section 821 may correspond to less than 200 steps (1 to 200 steps) of the iterative refinement model. Among the at least one image processing step, image processing steps 161 to 200 of an eighth section 822 may correspond to more than 200 steps (801 to 1000 steps) of the iterative refinement model.

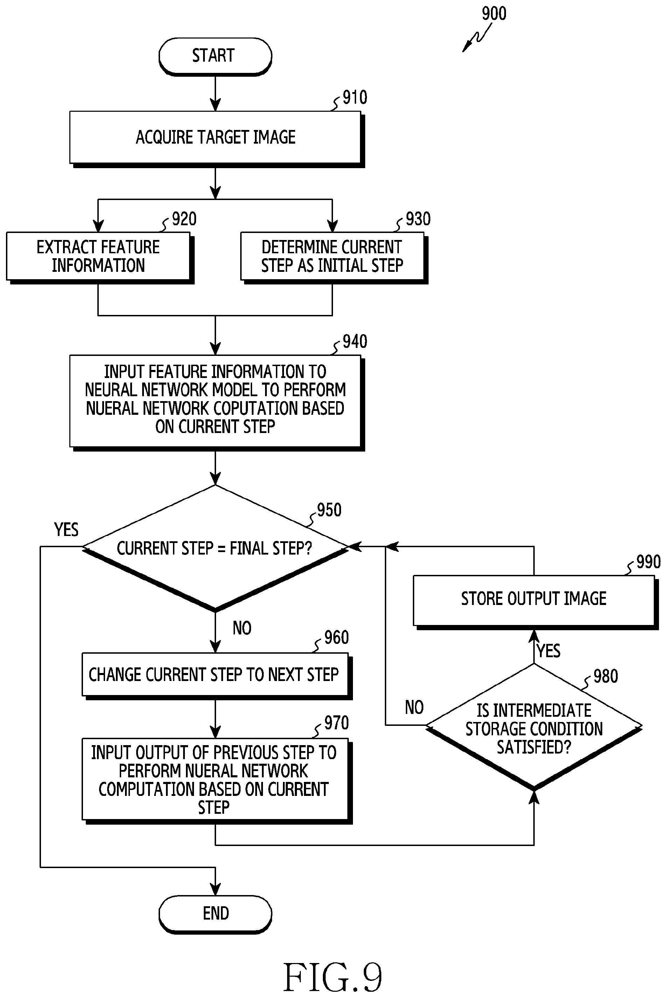

FIG. 9 is a flowchart 900 illustrating a process including an operation of storing an image while an electronic device (e.g., the electronic device 101 of FIG. 1) performs an image processing operation for acquiring a processed image, according to an embodiment.

The flowchart 900 of FIG. 9 illustrates a process of performing an image processing operation to acquire a processed image based on at least one image processing step determined among a plurality of image processing steps. In operation 910, the electronic device according to an embodiment may acquire a target image (e.g., the target image 321 of FIG. 3). For example, the electronic device may capture an image through a camera module (e.g., the camera module 180 of FIG. 1 or 2) to acquire image data. For example, the electronic device may acquire an image stored in a memory (e.g., the memory 130 of FIG. 2). For example, the electronic device may receive an image from an external device (e.g., the electronic device 102, the electronic device 104, or the electronic device 108 of FIG. 1) through a communication module (e.g., the communication module 190 of FIG. 1).

In an embodiment, upon initiating the image processing operation for acquiring the processed image for the target image, the electronic device may perform operation 920 of extracting feature information from the target image. The electronic device may perform operation 930 of setting a current step for the image processing to an initial step.

In an embodiment, the electronic device may perform operation 940 of inputting the feature information extracted in operation 920 to a neural network model to perform a neural network computation based on the current step (e.g., the initial step) among the at least one image processing step. The electronic device may input the feature information and an identification value for the current image processing step to the neural network model.

In an embodiment, the electronic device may perform operation 950 of determining whether the current step is a final step. When the current step is not the final step, the electronic device may perform operation 960 of changing the current step to a next step among the at least one image processing step (e.g., the at least one image processing step determined in operation 420 of FIG. 4). In operation 970, the electronic device may input an output of a previous step to the neural network model to perform the neural network computation based on the current step. In operation 970, the electronic device may input a step identification value indicating the current step to the neural network model, so that the neural network computation corresponding to the current step is performed for the output of the previous step. The electronic device may repeat the operation of inputting the output of the neural network computation to the neural network model again until the final step included in at least one image processing step is performed.

In operation 980, the electronic device according to an embodiment may determine whether an intermediate storage condition is satisfied. The intermediate storage condition may refer to a condition for storing an image corresponding to the output of the image processing step which is not the final step. When it is determined that the intermediate storage condition is satisfied, the electronic device may perform operation 990 of storing an output image corresponding to the output of the current step of the neural network computation. In operation 990, the electronic device may store the output image in a memory of the electronic device or in an external electronic device configured to communicate with the electronic device. The electronic device may store the output image in operation 990 and then perform operation 950. When it is determined that the intermediate storage condition is not satisfied, the electronic device may perform operation 950. The electronic device may further store metadata for the output image in operation 990.

For example, the electronic device may identify that a function of an application (e.g., a gallery application) which displays at least one image acquired through the camera has been executed while performing the image processing operation for acquiring the processed image from the target image acquired through the camera module. The electronic device may determine that the intermediate storage condition is satisfied according to the identification of the application being executed. The electronic device may store a restored image based on the output of the previous step according to the application being executed, and may display the stored image on a display (e.g., the display module 160 of FIG. 1) of the electronic device.

When it is determined in operation 950 that the current step is the final step, the electronic device according to an embodiment may acquire an enhanced image based on the output of the neural network model. For example, the electronic device may acquire the enhanced image by restoring the image based on the feature information included in the output of the neural network model. In the presence of the output image stored in operation 990, the electronic device may replace the stored output image with the enhanced image.

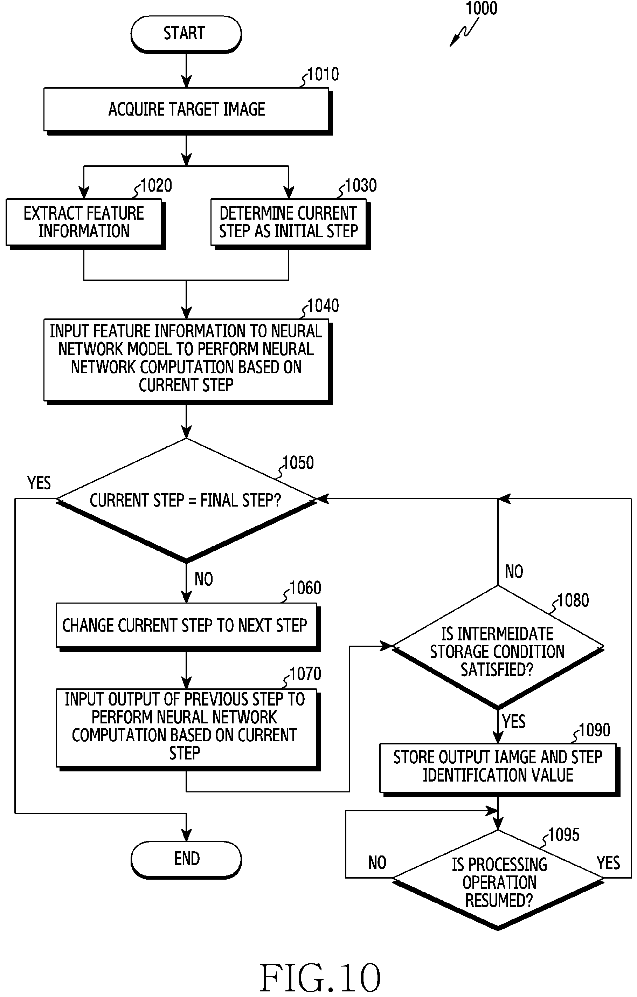

FIG. 10 is a flowchart 1000 illustrating a process in which an electronic device (e.g., the electronic device 101 of FIG. 1) stops and resumes an image processing operation for acquiring a processed image, according to an embodiment.

The flowchart 1000 of FIG. 10 illustrates image processing operations for acquiring a processed image based on at least one image processing step determined among a plurality of image processing steps. In operation 1010, the electronic device according to an embodiment may acquire a target image (e.g., the target image 321 of FIG. 3). For example, the electronic device may capture an image through a camera module (e.g., the camera module 180 of FIG. 1 or 2) to acquire image data. For example, the electronic device may acquire an image stored in a memory (e.g., the memory 130 of FIG. 2). For example, the electronic device may receive an image from an external device (e.g., the electronic devices 102, 104, and 108 of FIG. 1) through a communication module (e.g., the communication module 190 of FIG. 1).

In an embodiment, upon initiating the image processing operation for acquiring the processed image for the target image, the electronic device may perform operation 1020 of extracting feature information from the target image. The electronic device may perform operation 1030 of setting a current step to an initial step.

In an embodiment, the electronic device may perform operation 1040 of inputting the feature information extracted in operation 1020 to a neural network model to perform a neural network computation based on the current step (e.g., the initial step) among the at least one image processing step. The electronic device may input the feature information and an identification value for the current image processing step to the neural network model.

In an embodiment, the electronic device may perform operation 1050 of determining whether the current step is a final step. When the current step is not the final step, the electronic device may perform operation 1060 of changing the current step to a next step among the at least one image processing step (e.g., the at least one image processing step determined in operation 420 of FIG. 4). In operation 1070, the electronic device may input an output of a previous step to the neural network model to perform the neural network computation based on the current step. In operation 1070, the electronic device may input a step identification value indicating the current step to the neural network model, so that the neural network computation corresponding to the current step is performed for the output of the previous step. The electronic device may repeat the operation of inputting the output of the neural network computation to the neural network model again while performing the at least one image processing step.

In operation 1080, the electronic device according to an embodiment may determine whether an intermediate storage condition is satisfied. The intermediate storage condition may refer to a condition for storing an image corresponding to the output of the image processing step which is not the final step. When it is determined that the intermediate storage condition is satisfied, the electronic device may perform operation 1090 of storing an output image corresponding to the output of the current step of the neural network computation and the step identification value indicating the current step. In operation 1090, the electronic device may store the output image and the step identification value in a memory of the electronic device or in an external electronic device configured to communication with the electronic device. The electronic device may store the output image and the step identification value in operation 1090 and stop (or pause) the operation of performing the at least one image processing step for the target image. When it is determined that the intermediate storage condition is not satisfied, the electronic device may perform operation 1050. The electronic device may further store metadata for the output image in operation 1090.

In operation 1095, the electronic device according to an embodiment may determine whether to resume the image processing operation for acquiring the processed image. For example, the electronic device may store the output image (or feature information output from the neural network model) and the step identification value in operation 1090, based on a determination in operation 1080 that a remaining capacity of a battery (e.g., battery 189 in FIG. 1) of the electronic device is less than or equal to a reference value. The electronic device may stop the operation of performing the at least one image processing step until a condition for resuming the operation is satisfied. When the operation of performing the at least one image processing step is stopped based on the determination that the remaining capacity of the battery is less than or equal to the reference value, the electronic device may determine in operation 1095 whether the remaining capacity of the battery exceeds the reference value or whether external power is supplied. When the remaining capacity of the battery exceeds the reference value or the external power is supplied, the electronic device may perform operation 1050 to resume the operation of performing the at least one image processing step based on the stored output image (or feature information output from the neural network model) and the step identification value. The electronic device may resume the image processing operation for acquiring the processed image from the stopped image processing step based on the step identification value (i.e., from a next step following the last performed image processing step). When the condition for resuming the image processing operation for acquiring the processed image is not satisfied, the electronic device may monitor whether the condition for resuming the image processing operation is satisfied. For example, the electronic device may periodically perform operation 1095 until the condition for resuming the image processing operation for acquiring the processed image is satisfied.

In addition, for example, when it is determined in operation 1080 that the temperature acquired through the temperature sensor of the electronic device is greater than or equal to a first threshold, the electronic device may determine that the intermediate storage condition is satisfied and perform operation 1090. The electronic device may store the output image and the step identification value in operation 1090, and determine whether the temperature detected by the temperature sensor is below a second threshold in operation 1095. When the temperature is below the second threshold, the electronic device may perform operation 1050 to resume the image processing operation for acquiring the processed image. The second threshold may indicate a temperature lower than the first threshold.

When it is determined in operation 1050 that the current step is the final step, the electronic device according to an embodiment may acquire an enhanced image based on the output of the neural network model. For example, the electronic device may acquire the enhanced image by restoring the image based on feature information included in the output of the neural network model. In the presence of the output image stored in operation 1090, the electronic device may replace the stored output image with the enhanced image.

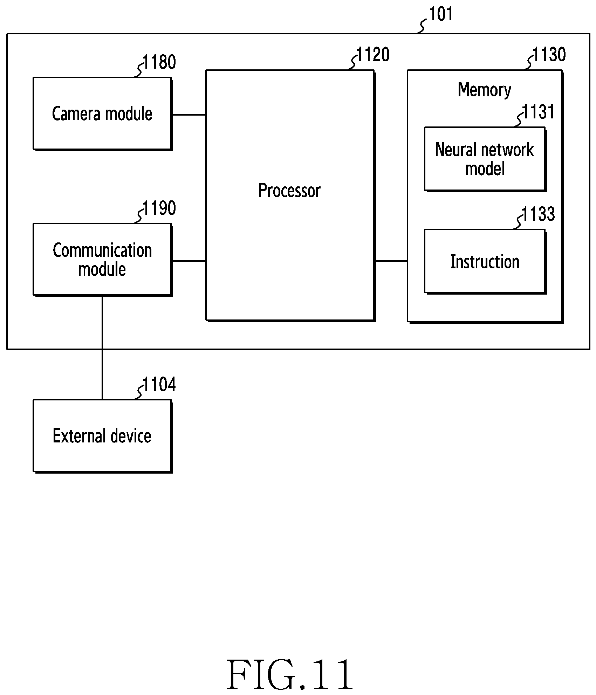

FIG. 11 is a block diagram illustrating a configuration of an electronic device 101 (e.g., the electronic device 101 of FIG. 1) according to an embodiment.

In an embodiment, the electronic device may include at least one processor 1120 (e.g., the processor 120 of FIG. 1) and a memory 1130 (e.g., the memory 130 of FIG. 2). The memory 1130 may store a neural network model 1131 to perform an image processing operation for acquiring a processed image, as well as one or more instructions 1133. The at least one processor 1120 may execute the one or more instructions 1133 to perform one or more image processing steps by using the neural network model 1131, thereby performing the image processing operation for acquiring the processed image for a target image.

In an embodiment, the neural network model 1131 may include a deep learning model created through training based on training data to perform the image processing operation for acquiring the processed image through a plurality of image processing steps. The one or more instructions 1133, when executed by the at least one processor 1120, may cause the electronic device 101 to determine at least one image processing step, among the plurality of image processing steps, to perform the image processing operation for acquiring the processed image from the target image.

In an embodiment, the electronic device 101 may further include a camera module 1180 (e.g., the camera module 180 of FIG. 1 or 2). The electronic device 101 may acquire the target image through the camera module 1180. For example, the electronic device 101 may acquire image data based on a signal detected by an image sensor (e.g., the image sensor 230 of FIG. 2) of the camera module 1180 by operating the camera module 1180 based on a camera application executed by the at least one processor 1120. The electronic device 101 may determine at least one image processing step for acquiring the processed image from the acquired image data based on information related to the acquired image data.

In an embodiment, the electronic device 101 may further include a communication module 1190 (e.g., the communication module 190 of FIG. 1). The electronic device 101 may receive the target image from an external device 1104 (e.g., the electronic device 102, the electronic device 104, or the server 108 of FIG. 1) through the communication module 1190. Although it is illustrated in FIG. 11 that the electronic device 101 includes the neural network model 1131 to perform the image processing operation for acquiring the processed image from the target image, in an embodiment, the electronic device 101 may transmit feature information of the target image to the external device 1104 and receive, from the external device 1104, feature information corresponding to a result of image processing performed based on the neural network model.

In an embodiment, the one or more instructions 1133, when executed by the at least one processor 1120, may cause the electronic device 101 to determine a policy for determining at least one image processing step to perform the image processing operation, thereby acquiring the processed image from the target image. The one or more instructions 1133, when executed by the at least one processor 1120, may cause the electronic device 101 to determine a schedule for performing at least one image processing step based on the determined policy. For example, the neural network model 1131 may include a deep learning model trained based on N image processing steps, or the electronic device 101 may acquire the processed image based on M image processing steps. For example, in the performing of the image processing operation for acquiring the processed image according to the neural network model 1131 trained based on 1000 image processing steps, the electronic device 101 may perform the image processing operation based on 100 steps by increasing the step identification value of the image processing step to be performed by 10 steps out of the 1000 image processing steps. In an embodiment, in some sections of the image processing step, the image processing step may proceed in small steps, and in other sections, the image processing step may proceed in a greater number of steps. For example, in an initial step of performing image processing, inference steps may be densely arranged, and in a later step of the image processing, image processing steps (inference processes within a diffusion process according to the neural network model) may be sparsely arranged.

In an embodiment, the one or more instructions 1133, when executed by the at least one processor 1120, may cause the electronic device 101 to determine the at least one image processing step based on at least one of metadata on an image capturing situation, region information acquired by analyzing regions of the target image, user-related information of the electronic device 101, and system information of the electronic device 101. The metadata on the image capturing situation may include, for example, at least one of whether the electronic device 101 has captured the image based on an HDR mode, what is a noise reduction operation mode, what is a sensor gain value for an image sensor, and the number of images to be synthesized in an image synthesizing operation mode. The region information may include, for example, information for classifying a region in which a subject is captured in an image and a subject captured in the region, or information for classifying whether a captured image is an image capturing a particular scene (e.g., a person, a landscape, or a document). The user-related information may include, for example, information indicating whether a preview is being provided to a user or information related to a value storing a configuration associated with the image processing operation for acquiring the processed image by the user. The system information may include, for example, information on a remaining capacity of a battery of the electronic device, a temperature (e.g., a temperature of a processor) detected through a temperature sensor, or a state of a network to which the electronic device is connected.

For example, the one or more instructions 1133, when executed by the at least one processor 1120, may cause the electronic device 101 to perform the image processing operation for acquiring the processed image based on a greater number of steps than the image processing steps applied during training of the neural network model 1131, when the target image is acquired through the camera module 1180 based on the HDR mode. Since an HDR image requires processing for a wide dynamic range from a noisy dark region to a bright region, the electronic device 101 may perform a greater number of image processing steps for the HDR image.

For example, the one or more instructions 1133, when executed by the at least one processor 1120, may cause the electronic device 101 to analyze the frequency information of an image, to perform a greater number of image processing steps as information of a high-frequency band increases, and to perform a smaller number of image processing steps as the information of the high-frequency band decreases.

For example, the one or more instructions 1133, when executed by the at least one processor 1120, may cause the electronic device 101 to perform a greater number of image processing steps as noise in a target image increases, and to perform a smaller number of image processing steps as the noise decreases. For example, the one or more instructions 1133, when executed by the at least one processor 1120, may cause the electronic device 101 to determine at least one image processing step based on saturation or hue information of an image.

For example, the one or more instructions 1133, when executed by the at least one processor 1120, may cause the electronic device 101 to determine at least one processing step based on a sensor gain value set by the camera module 1180 for capturing an image. The electronic device 101 may capture the image based on a high sensor gain value in low ambient light conditions, such as at night or in a dark indoor environment. The electronic device 101 may perform the image processing operation for acquiring the processed image based on a greater number of image processing steps when the sensor gain value is high. On the contrary, when an image is captured outdoors in bright daylight, the electronic device 101 may capture the image based on a low sensor gain value. The electronic device 101 may perform the image processing operation for acquiring the processed image based on a smaller number of image processing steps when the sensor gain value is low.

For example, for portions which significantly affect photo quality, such as a region in which a person's face, the sky, or text is captured, the electronic device 101 may perform the image processing operation for acquiring the processed image based on a greater number of image processing steps. For an image capturing a scene with low noise, such as an outdoor mountain or sea, the electronic device 101 may perform the image processing operation for acquiring the processed image based on a smaller number of image processing steps. For a region having a large amount of detail of a target image (e.g., a region in which hair or an animal with a large amount of fur is captured), the electronic device 101 may perform the image processing operation for acquiring the processed image based on a greater number of image processing steps. When the target image is an image capturing the moon, since the image is captured at night with insufficient amount of light, the electronic device 101 may perform the image processing operation for acquiring the processed image based on a greater number of image processing steps.

For example, the electronic device 101 may perform the image processing operation for acquiring the processed image based on a relatively smaller number of image processing steps while displaying a preview image (live preview) based on an image stream output from the camera module 1180. For an image captured according to a night shooting mode or an image quality-prioritized mode, the electronic device 101 may acquire the processed image based on a greater number of image processing steps. The electronic device 101 may acquire the processed image based on an image processing mode (e.g., an image quality-prioritized mode or a speed-prioritized mode) set by a user. For example, when the user sets the speed-prioritized mode, the electronic device 101 may acquire the processed image based on a smaller number of image processing steps, and when the user sets the image quality-prioritized mode, the electronic device 101 may acquire the processed image based on a greater number of image processing steps.

The aforementioned examples may be configured by combining two or more thereof, or may be configured in the opposite manner.

In an embodiment, an electronic device (e.g., the electronic device 101 of FIG. 1, the electronic device 101 of FIG. 11) may include one or more processors (e.g., the processor 120 of FIG. 1, the at least one processor 1120 of FIG. 11), and a memory (e.g., the memory 130 of FIG. 1, the memory 1130 of FIG. 11) configured to store one or more instructions and a neural network model created by training a neural network to output an inference result for information of an input image. The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to determine at least one image processing step for acquiring a processed image from a target image, among a plurality of image processing steps performed by the neural network model, based on image information related to the target image or context information related to a state of the electronic device. The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to acquire the processed image from the target image, based on the determined at least one image processing step. Each of the plurality of image processing steps may include acquiring an inference result by inputting the target image or an output of the neural network model to the neural network model.

In an embodiment, the one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to input, to the neural network model, an output acquired as a result of inputting feature information of the target image to the neural network model, together with a step identification value indicating a next step among the determined at least one image processing step.

In an embodiment, the electronic device (e.g., the electronic device 101 of FIG. 1, the electronic device 101 of FIG. 11) may further include a camera configured to acquire the target image. The context information may include a setting value or environment-related configuration information for allowing the camera (e.g., the camera module 180 of FIG. 1, the camera module 1180 of FIG. 11) to acquire the target image.

In an embodiment, the configuration information may include information on a dynamic range of the target image acquired through the camera (e.g., the camera module 180 of FIG. 1, the camera module 1180 of FIG. 11). The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to determine a smaller number of steps to be the at least one image processing step as the dynamic range decreases.

In an embodiment, the configuration information may include illuminance information acquired through an image sensor (e.g., the image sensor 230 of FIG. 2) of the camera (e.g., the camera module 180 of FIG. 1, the camera module 1180 of FIG. 11) or an illuminance sensor of the electronic device (e.g., the electronic device 101 of FIG. 1, the electronic device 101 of FIG. 11). The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to determine a smaller number of steps to be the at least one image processing step as the illuminance information indicates higher illuminance.

In an embodiment, the configuration information may include a sensor gain value of the image sensor (e.g., the image sensor 230 of FIG. 2) included in the camera (e.g., the camera module 180 of FIG. 1, the camera module 1180 of FIG. 11). The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to determine a greater number of steps to be the at least one image processing step as the sensor gain value is higher.

In an embodiment, the one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to determine whether an intermediate storage condition is satisfied as to whether to store an output of any one of the at least one image processing step. The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to store an output image of the one image processing step and a step identification value for the image processing step in the memory (e.g., the memory 130 of FIG. 1, the memory 1130 of FIG. 11) or in an external electronic device configured to communicate with the electronic device (e.g., the electronic device 101 of FIG. 1, the electronic device 101 of FIG. 11), based on the determination that the intermediate storage condition is satisfied.

In an embodiment, the electronic device (e.g., the electronic device 101 of FIG. 1, the electronic device 101 of FIG. 11) may further include a display (e.g., the display module 160 of FIG. 1). The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to, while performing the at least one image processing step, determine that the intermediate storage condition is satisfied based on execution of a function of an application configured to display an image, and display, on the display (e.g., the display module 160 of FIG. 1), a screen including the output image stored in the memory (e.g., the memory 130 of FIG. 1, the memory 1130 of FIG. 11) or in the external electronic device.

In an embodiment, the one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to further store metadata for the target image in the memory (e.g., the memory 130 of FIG. 1, the memory 1130 of FIG. 11) or in the external electronic device, based on the determination that the intermediate storage condition is satisfied.

In an embodiment, the electronic device (e.g., the electronic device 101 of FIG. 1, the electronic device 101 of FIG. 11) may further include a battery (e.g., the battery 189 of FIG. 1). The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to determine that the intermediate storage condition is satisfied based on a remaining capacity of the battery (e.g., the battery 189 of FIG. 1) being less than or equal to a reference value. The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to, when the remaining capacity of the battery (e.g., the battery 189 of FIG. 1) is less than or equal to the reference value, store the output image of the one image processing step and the step identification value for the image processing step in the memory (e.g., the memory 130 of FIG. 1, the memory 1130 of FIG. 11) or in the external electronic device configured to communicate with the electronic device (e.g., the electronic device 101 of FIG. 1, the electronic device 101 of FIG. 11). The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to, when the remaining capacity of the battery (e.g., the battery 189 of FIG. 1) is less than or equal to the reference value, stop performing the at least one image processing step.

In an embodiment, the electronic device (e.g., the electronic device 101 of FIG. 1, the electronic device 101 of FIG. 11) may include a temperature sensor. The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to, when a temperature acquired through the temperature sensor is greater than or equal to a first threshold, determine that the intermediate storage condition is satisfied, store the output image and the step identification value in the memory (e.g., the memory 130 of FIG. 1, the memory 1130 of FIG. 11) or in the external electronic device configured to communicate with the electronic device (e.g., the electronic device 101 of FIG. 1, the electronic device 101 of FIG. 11), and stop performing the at least one image processing step. The one or more instructions, when executed by the one or more processors (e.g., the processor 120 of FIG. 1, the at least one processor 1120 of FIG. 11), may cause the electronic device (e.g., the electronic device 101 of FIG. 1, the electronic device 101 of FIG. 11) to, after storing the output image, when the temperature acquired through the temperature sensor is less than a second threshold, restart performing the at least one image processing step from a stopped step, based on the stored output image and the step identification value.

A method of operating an electronic device (e.g., the electronic device 101 of FIG. 1, the electronic device 101 of FIG. 11) according to an embodiment may include determining at least one image processing step for acquiring a processed image from a target image among a plurality of image processing steps performed using a neural network model created by training a neural network to predict a processing result for an input image, based on image information related to the target image or context information related to a state of the electronic device (e.g., the electronic device 101 of FIG. 1, the electronic device 101 of FIG. 11). The method of operating the electronic device (e.g., the electronic device 101 of FIG. 1, the electronic device 101 of FIG. 11) according to an embodiment may include performing image processing on the target image, based on the determined at least one image processing step. The performing of the image processing may include inputting the target image to the neural network model to perform a first step among the at least one image processing step. The performing of the image processing may include inputting an output image, which is output as a result of performing the first step for the target image by the neural network model, to the neural network model to perform a second step among the at least one image processing steps.

In an embodiment, the context information may include a setting value or environment-related configuration information to allow a camera (e.g., the camera module 180 of FIG. 1, the camera module 1180 of FIG. 11) of the electronic device (e.g., the electronic device 101 of FIG. 1, the electronic device 101 of FIG. 11) to capture an image.

In an embodiment, the configuration information may include information on a dynamic range of the target image acquired through the camera (e.g., the camera module 180 of FIG. 1, the camera module 1180 of FIG. 11). The determining of the at least one image processing step may include determining a smaller number of steps to be the at least one image processing step as the dynamic range decreases.

In an embodiment, the configuration information may include illuminance information acquired through an image sensor (e.g., the image sensor 230 of FIG. 2) of the camera (e.g., the camera module 180 of FIG. 1, the camera module 1180 of FIG. 11) or an illuminance sensor of the electronic device (e.g., the electronic device 101 of FIG. 1, the electronic device 101 of FIG. 11). The determining of the at least one image processing step may include determining a smaller number of steps to be the at least one image processing step as the illuminance information indicates higher illuminance.

In an embodiment, the configuration information may include a sensor gain value of an image sensor (e.g., the image sensor 230 of FIG. 2) included in the camera (e.g., the camera module 180 of FIG. 1, the camera module 1180 of FIG. 11). The determining of the at least one image processing step may include determining a greater number of steps to be the at least one image processing step as the sensor gain value is higher.

In an embodiment, the performing of the image processing may include determining whether an intermediate storage condition is satisfied as to whether to store an output of any one of the at least one image processing step. The performing of the image processing may include storing an output image of the one image processing step and a step identification value for the image processing step in the memory (e.g., the memory 130 of FIG. 1, the memory 1130 of FIG. 11) or in an external electronic device configured to communicate with the electronic device (e.g., the electronic device 101 of FIG. 1, the electronic device 101 of FIG. 11), based on the determination that the intermediate storage condition is satisfied.

In an embodiment, the determining of whether the intermediate storage condition may include identifying that a function of an application configured to display the image while performing the image processing has been executed. The method may further include, while performing the image processing, display, on a display (e.g., the display module 160 of FIG. 1) of the electronic device (e.g., the electronic device 101 of FIG. 1, the electronic device 101 of FIG. 11), the output image stored in the memory (e.g., the memory 130 of FIG. 1, the memory 1130 of FIG. 11) or in the external electronic device, based on the identifying that the function of the application configured to display the image has been executed.

In an embodiment, the determining whether the intermediate storage condition is satisfied may include determining that the intermediate storage condition is satisfied based on a remaining capacity of a battery of the electronic device (e.g., the electronic device 101 of FIG. 1, the electronic device 101 of FIG. 11) being less than a reference value. The method may include performing the image processing based on the determination that the intermediate storage condition is satisfied.

In an embodiment, a non-transitory computer-readable recording medium may store a computer program which, when executed by an electronic device, causes the electronic device to perform the aforementioned method.

The components of the aforementioned embodiment are not inseparably combined with each other. At least some of the components of an embodiment may be combined with other components thereof to constitute an embodiment, within a range that provides a means for solving the problems to be addressed in the disclosure.

According to various embodiments of the disclosure, an image having high quality (e.g., an image with less noise or improved detail) may be acquired using a neural network model, while reducing a time required for computations.

According to various embodiments of the disclosure, an image having high quality may be acquired using a neural network model, while reducing required power consumption.

Advantages acquired in the disclosure are not limited to the aforementioned advantages, and other advantages not mentioned herein may be clearly understood by those skilled in the art to which the disclosure pertains from the following descriptions.

Methods based on the embodiments disclosed in the claims and/or specification of the disclosure may be implemented in hardware, software, or a combination of both.

When implemented in software, a computer readable recording medium for storing one or more programs (i.e., software modules) may be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the disclosure.

In the disclosure, a function or operation performed by an electronic device may be performed by at least one processor executing at least one instruction stored in a memory. The function or operation of the electronic device mentioned in the disclosure may be performed by one processor executing at least one instruction, or may be performed by a combination of multiple processors executing one instruction. It may be understood that the processor mentioned in this disclosure includes a circuit for controlling other components of the electronic device. For example, the at least one processor may include a central processing unit (CPU), a micro-processor unit (MPU), an application processor (AP), a communication processor (CP), or a neural processing unit (NPU), a system on chip (SoC), or an integrated circuit (IC), which is configured to execute at least one instruction. The at least one processor may be configured to perform the operation of the electronic device described above.

In the disclosure, programs (e.g., software modules or software) may be stored in a random access memory and/or a non-volatile memory including a flash memory, a read only memory (ROM), an electrically erasable programmable read only memory (EEPROM), a magnetic disc storage device, a compact disc-ROM (CD-ROM), digital versatile discs (DVDs), other forms of optical storage devices, or a magnetic cassette. Alternatively, the programs may be stored in a memory configured in combination of all or some of these storage media. The memory may be constructed of a single storage medium or a combination of a plurality of storage media. The at least one instruction may be stored in the single storage medium, or may be stored in the plurality of storage media in a distributed manner.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may have access to a device for performing an embodiment of the disclosure via an external port. In addition, an additional storage device on a communication network may have access to the device for performing the embodiment of the disclosure.

In the aforementioned specific embodiments of the disclosure, a component included in the disclosure is expressed in a singular or plural form according to the specific embodiment proposed herein. However, the singular or plural expression is selected properly for a situation proposed for the convenience of explanation, and thus the various embodiments of the disclosure are not limited to a single or a plurality of components. Therefore, a component expressed in a plural form may also be expressed in a singular form, or vice versa.

In addition, in the disclosure, the term "unit", "module", or the like may be a hardware component such as a processor or a circuit, and/or a software component executed by the hardware component such as the processor.

The "unit" and the "module" may be implemented by a program stored in an addressable storage medium and executable by the processor. For example, the "unit" and "module" may be implemented by software components, object-oriented software components, class components, and task components, processes, functions, attributes, procedures, subroutines, segments of program code, drivers, firmware, microcode, circuitry, data, databases, data structures, tables, arrays, and variables.

Specific implementations described in the disclosure are only one embodiment, and do not limit the scope of the disclosure in any way. For brevity of the specification, descriptions on the conventional electronic components, control systems, software, and other functional aspects of the systems may be omitted.

In addition, in the disclosure, "including at least one of a, b, or c" may mean "including only a", "including only b", "including only c", "including a and b", "including b and c", " including a and c", or "including a, b, and c".

While the disclosure has been shown and described with reference to certain preferred embodiments thereof, it will be understood by those skilled in the art that various changes in form and details may be made therein without departing from the spirit and scope of the disclosure as defined by the appended claims. Therefore, the scope of the disclosure is defined not by the detailed description thereof but by the appended claims, and all differences within equivalents of the scope will be construed as being included in the disclosure.

## Claims

1. An electronic device comprising:
one or more processors; and
memory configured to store one or more instructions and a neural network model created by training a neural network to output an inference result for information of an input image,
wherein the one or more instructions, when executed collectively or individually by the one or more processors, cause the electronic device to:
determine at least one image processing step for acquiring a processed image from a target image, among a plurality of image processing steps performed by the neural network model, based on image information related to the target image or context information related to a state of the electronic device; and
acquire the processed image from the target image, based on the determined at least one image processing step,
wherein each of the plurality of image processing steps comprises acquiring an inference result by inputting the target image or an output of the neural network model to the neural network model.

2. The electronic device of claim 1, wherein the one or more instructions, when executed collectively or individually by the one or more processors, cause the electronic device to input, to the neural network model, an output acquired as a result of inputting feature information of the target image to the neural network model, together with a step identification value indicating a next step among the determined at least one image processing step.

3. The electronic device of claim 1 or 2, further comprising
a camera configured to acquire the target image,
wherein the context information comprises a setting value or environment-related configuration information for allowing the camera to acquire the target image.

4. The electronic device of any one of the preceding claims,
wherein the configuration information comprises information on a dynamic range of the target image acquired through the camera, and
wherein the one or more instructions, when executed collectively or individually by the one or more processors, cause the electronic device to determine a smaller number of steps to be the at least one image processing step as the dynamic range deceases.

5. The electronic device of any one of the preceding claims,
wherein the configuration information comprises illuminance information acquired through an image sensor of the camera or an illuminance sensor of the electronic device, and
wherein the one or more instructions, when executed collectively or individually by the one or more processors, cause the electronic device to determine a smaller number of steps to be the at least one image processing step as the illuminance information indicates higher illuminance.

6. The electronic device of any one of the preceding claims,
wherein the configuration information comprises a sensor gain value of an image sensor included in the camera, and
wherein the one or more instructions, when executed collectively or individually by the one or more processors, cause the electronic device to determine a greater number of steps to be the at least one image processing step as the sensor gain value increases.

7. The electronic device of any one of the preceding claims, wherein the one or more instructions, when executed collectively or individually by the one or more processors, cause the electronic device to:
determine whether an intermediate storage condition is satisfied as to whether to store an output of any one of the at least one image processing step; and
based on the determination that the intermediate storage condition is satisfied, store an output image of the one image processing step and a step identification value for the image processing step in the memory or in an external electronic device configured to communicate with the electronic device.

8. The electronic device of any one of the preceding claims, further comprising
a display,
wherein the one or more instructions, when executed collectively or individually by the one or more processors, cause the electronic device to, while performing the at least one image processing step, determine that the intermediate storage condition is satisfied based on execution of a function of an application configured to display an image, and display, on the display, a screen including the output image stored in the memory or in the external electronic device.

9. The electronic device of any one of the preceding claims, wherein the one or more instructions, when executed collectively or individually by the one or more processors, cause the electronic device to further store metadata for the target image in the memory or in the external electronic device, based on the determination that the intermediate storage condition is satisfied.

10. The electronic device of any one of the preceding claims, further comprising
a battery,
wherein the one or more instructions, when executed collectively or individually by the one or more processors, cause the electronic device to:
determine that the intermediate storage condition is satisfied based on a remaining capacity of the battery being less than or equal to a reference value;
store the output image of the one image processing step and the step identification value for the image processing step in the memory or in the external electronic device configured to communicate with the electronic device; and
stop performing the at least one image processing step.

11. The electronic device of any one of the preceding claims, further comprising
a temperature sensor,
wherein the one or more instructions, when executed collectively or individually by the one or more processors, cause the electronic device to:
when a temperature acquired through the temperature sensor is greater than or equal to a first threshold, determine that the intermediate storage condition is satisfied, store the output image and the step identification value in the memory or in the external electronic device configured to communicate with the electronic device, and stop performing the at least one image processing step; and
after storing the output image, when the temperature acquired through the temperature sensor is less than a second threshold, restart performing the at least one image processing step from a stopped step, based on the stored output image and the step identification value.

12. A method of operating an electronic device, the method comprising:
determining at least one image processing step for acquiring a processed image from a target image among a plurality of image processing steps performed using a neural network model created by training a neural network to predict a processing result for an input image, based on image information related to the target image or context information related to a state of the electronic device; and
acquiring the processed image from the target image, based on the determined at least one image processing step,
wherein the acquiring of the processed image comprises:
inputting the target image to the neural network model to perform a first step among the at least one image processing step; and
inputting an output image, which is output as a result of performing the first step for the target image by the neural network model, to the neural network model to perform a second step among the at least one image processing steps.

13. The method of claim 12, wherein the context information comprises a setting value or environment-related configuration information to allow a camera of the electronic device to capture an image.

14. The method of claim 13,
wherein the configuration information comprises information on a dynamic range of the target image acquired through the camera, and
wherein the determining of the at least one image processing step comprises determining a smaller number of steps to be the at least one image processing step as the dynamic range decreases.

15. A non-transitory computer-readable storage medium storing one or more computer programs including instructions, when executed by an electronic device, causing the electronic device to perform operations of:
determining at least one image processing step for acquiring a processed image from a target image among a plurality of image processing steps performed using a neural network model created by training a neural network to predict a processing result for an input image, based on image information related to the target image or context information related to a state of the electronic device; and
acquiring the processed image from the target image, based on the determined at least one image processing step,
wherein the acquiring of the processed image comprises:
inputting the target image to the neural network model to perform a first step among the at least one image processing step; and
inputting an output image, which is output as a result of performing the first step for the target image by the neural network model, to the neural network model to perform a second step among the at least one image processing steps.
